# EUROPEAN PATENT SPECIFICATION

(11) **EP 1 795 875 B1**
(45) Date of publication and mention of the grant of the patent: **15.10.2008**
(21) Application number: 05077814.1
(22) Date of filing: 09.12.2005
(51) Int. Cl.: G01F 23/68, G01F 23/292, G01F 23/76

(54) **An apparatus for measuring volume of liquid in a vessel**
Vorrichtung zur Volumenmessung einer Flüssigkeit in einem Gefäß
Appareil de mesure d'un volume de liquide dans une cuve

(43) Date of publication of application: 13.06.2007
(73) Proprietor: Unomedical A/S, 3460 Birkerød (DK)
(72) Inventor: Samssund Herrmann, Miguel, 4000 Roskilde (DK)
(74) Representative: Plougmann & Vingtoft A/S

(56) References cited:
- DE-A1- 4 217 669
- DE-C- 876 166
- ES-A1- 2 135 337

## Description

The present invention relates to an apparatus for measuring the volume of liquid in a vessel, in particular optic based measurement of volume of liquid, such as body liquids of bedridden patients. The present invention also relates to a method of measuring volume of liquid in a vessel.

### BACKGROUND OF THE INVENTION

Various apparatuses are used in hospitals for monitoring the volume of urination (diuresis) from bedridden patients and in particular patients with catheters inserted in the urethra.

EP 0 398 890 discloses an apparatus for mechanical measuring of the volume of urine from bedridden patients. The apparatus comprises a measuring vessel with a valve body being displaceable therein, the valve body being divided into a reception chamber and an overflow chamber. The urine from the patient enters into the reception chamber and is measured via a suitable measurement scale provided on the outside of the valve body, and the volume of the collected urine can be read at any given time.

However, apparatuses using mechanical measurement of the volume, as the above mentioned one, require a nurse reading the volume with regular intervals and for writing down the present value of the volume manually. Besides the disadvantage of doing such procedure manually, the manual reading is done by changing personal during a 24 hours shift at the hospital inducing the risk of inaccurate values of the volume of present urine discharged into the vessel.

To overcome the disadvantage of manual reading of volume of body liquids apparatuses have been developed using electronic measuring of the volume. US 5,257,090 discloses a laser diode distance measurement device including a laser diode assembly comprising a laser diode and photodiode emitting light to a lens providing collimated light incident on a float being covered with reflective tape on its top surface. The light is reflected from the float back to the laser diode assembly causing the assembly to provide a signal having magnitude pulses (due to coherent interference) on a line to a liquid level measurement circuit related to a distance L to the float.

In another technical field DE 42 17 669 discloses another electronic measuring of volume in e.g. a gas tank, wherein a light source is mounted above the tank and directs a light beam vertically into the tank. A reflecting float having a conical upper surface defines the fluid level and the upper surface of the float reflects light to an array of photocells positioned at one side of the top of the tank. The position of the reflected beam on the array relates to the position of the reflecting float. The float is held in a vertical guide having a slit for directing the light to the one of the photocells in the array of photocells. The volume of liquid is determined from which photocell in the array of photocells the light is received.

The above-mentioned apparatuses use a float with a 100% reflective surface, which requires the float to be kept in precise vertical position in order to ensure that the measuring is correct. If the apparatus and thus the float are tilted away from vertical position the measurement of the volume of liquid present in the vessel divert from the actual volume present. In US 5,257,090 the float reflects the light in a direction diverting away from the detecting laser assembly resulting in an incorrect measurement of the actual volume of liquid. In some cases the float may even tilted in such a degree as to result in that the laser assembly never receives the light reflected by the surface of the float. If the float of DE 42 17 669 is tilted the surface of the float will reflect the light in a incorrect angle resulting in an inaccurate measurement of the volume of liquid present in the vessel in that the light will be received by an none intended photocell of the array of photocells.

ES-A1-2 135 337 discloses a container having a float with a convex shaped mirror, which may cause inaccurate readings if the container is tilted.

### SUMMARY OF THE INVENTION

An objective of the present invention is to provide an improved apparatus to at least partly overcome the disadvantages and drawbacks of the known apparatuses presented above.

It is therefore an object of the present invention to provide an improved apparatus for electronic measurement of liquid in a vessel capable of measuring an accurate volume more independent of the vertical orientation of the vessel.

Furthermore, it is an object of the present invention to provide an improved apparatus for electronic measurement of liquid in a vessel suitable for bedridden patients.

This objective and the advantages that will become evident from the following description of the invention are obtained by the following apparatus according to the present invention, said apparatus for collecting and measuring volume of liquids comprising; a vessel having a liquid inlet and a liquid outlet, said vessel comprising a float adapted to be disposed at a level equal to the surface of a liquid in the vessel, a guiding member defining a vertical movement guidance for the float a light source assembly being provided above said float and adapted to emit a light beam towards a surface of said float, said surface of the float being rough and uneven and thereby diffuse reflective, the apparatus further comprising sensing means for sensing diffused light reflected from said float surface and processing means for receiving and processing input from said sensing means based on the diffused reflected light so as to calculate the level position of the float and thereby the volume of liquid present in the vessel.

The diffuse reflective surface means that the portion of light that falls on the float surface is radiated diffusely in all directions. Thus, the light beam will be reflected in all directions and not just in one direction, which is the case if the surface is not diffuse, for instance if the surface is very smooth, such as a mirror. As the light beam is reflected in all directions, the apparatus is not sensitive in relation to the vertical orientation of the vessel, and a correct measurement will be obtained independent of the vertical orientation of the vessel.

The efficiency of the diffuse reflection from the float surface depends i.a. on the color and the smoothness of the surface. The surface is uneven and preferably in a light color, which means that the surface is rough and defined by "valleys and hills" each giving a different angle of reflection in relation to the substantially vertical incoming light beam from the light source assembly.

The float may be made of any suitable floating material, such as plastic, cork or air-filled metal.

The float may have any suitable shape as long as its color and surface roughness is sufficiently diffuse reflective, cf. above, and the shape may for example be flat, concave or convex.

In one embodiment the light source may be a laser. By using a light source such as a laser the measurements is not substantially influenced by light from the surrounding of the apparatus. In another embodiment the light source may be a UV-light source.

In yet another embodiment of the present invention the float may be positioned inside the guiding member. In this way the guiding member guides the float in its periphery edges while the float is still able to tilt within the guiding member in order to follow the liquid surface despite any tilting movements of the apparatus. The periphery of the float may be congruous to the shape of the guiding means.

The guiding member may in another embodiment comprise a rod-shaped member, and the float may be positioned so that the guiding member extends through the centre of the float. In this way the float can slide along the rod-shaped member and is guided at the edges of such.

Alternatively, the float may be positioned inside the guiding member, for example being a tube-like member not open for fluid entering the vessel, and wherein a further floating element is disposed on the surface of the liquid outside the guiding member, the floating element and the float being at the same level by means of magnetic interaction between them. The float will then always be at the level of the liquid surface while not being in contact with the liquid, which minimises the risk of the float getting locked inside the guiding member. The floating element may be a magnetic ring floating on the liquid surface and surrounding the tube-like guiding member, both the floating element and the float being magnetic.

The level position of the float is preferably determined by optical laser triangulation, and the sensing means (often called the "light-receiving element") is preferably a PSD (Position Sensitive Detector) sensor or a CCD (Charge Coupled Device) sensor including a lens positioned in front of the sensor for focusing the light reflected from the surface of the float.

The sensor determines the position of the float by measuring the light reflected from its surface. The light source assembly emits a light spot onto the float. An optical lens system focuses the reflected light onto a light sensitive device (receiving element), which may be provided in the sensor head. If the float changes its position from a reference point, the position of the projected spot on the detector changes too. Thus, it is possible to calculate the position of the float based on the reflected incoming light.

The PSD sensor is an analog sensor that relies on current generated in a photodiode. The output current is proportional to the reflected light spot's position on the sensor.

The CCD sensor is a digital pixel-based array sensor that preferably has 1024 discrete voltages representing the amount of light on each pixel. Thus, it is possible to view the intensity distribution of an imaged spot, and image processing is then incorporated for the linear triangulation measurement.

The apparatus may be used to measure volume of liquid for any applications, but it is preferably used for measuring volume of body liquids. In particular, the apparatus is used for measuring urine (diuresis), and the inlet of the vessel can be coupled to a catheter inserted in the bladder of a bedridden patient.

The vessel comprises a guiding member, which is open for the liquid in the vessel, such that the float will float upwards or downwards inside the guiding member when the vessel is filled or emptied, respectively.

The guiding member may in one embodiment be in the form of a tube, preferably a transparent tube. Furthermore the tube may in another embodiment have slots through which the liquid inside the vessel can enter. The float may in this way float freely inside the tube so as to ensure that the float is not locked in the tube.

The light assembly may as mentioned above be any kind of laser source generating a laser beam towards the surface of the float. A lens may in one embodiment be provided in front of the laser for collimating the light from the laser.

As mentioned it may happen that the vessel is tilted in relation to vertical, and it that case that apparatus must still measure the correct amount of liquid present in the vessel. In order to correct for the tilting when calculating the volume, the apparatus may further comprise an accelerometer adapted to measure the force of gravity and send an input to the processing means indicating the angle to vertical of the vessel to be used in calculating the volume of liquid present in the vessel. Thus, the correct volume of liquid will always be measured even if the patient by accident tilts the vessel.

The apparatus may comprise a first valve for closing said inlet. The first valve may be adapted to close the inlet in response to an input received from the accelerometer and/or processing means when the vessel is tilted a given angle from vertical. In this way liquid is hindered from flowing back through the inlet of the vessel and into the catheter again e.g. when the apparatus placed beside a bedridden patient. Thus, the apparatus can be placed horizontally without any outflow of liquid, which is very helpful, if the patient needs to get out of bed and therefore must manipulate the vessel.

The apparatus according to the present invention may comprise a collection chamber connected to the liquid outlet of the vessel for collecting liquid emptied from the vessel. When the vessel is full, the liquid is emptied into the collection chamber, which preferably is made of a transparent flexible plastic and is disposable.

A pipe may provide the fluid connection between the collection chamber and the vessel, and the pipe may define a loop with a highest point being movable from above liquid level to below liquid level in the vessel so as to enable emptying of said vessel by means of siphon principle. Thus, a simple mechanical emptying arrangement is provided. The loop is lifted and lowered from outside the vessel electronically by a control unit.

Preferably, the fluid connection between the collection chamber and vessel may comprise a second valve for opening in order to empty the vessel and subsequently for closing the fluid connection. Said first and/or second valve may be manually or electronic controlled. The first valve may be controllable in relation to the second valve, such that the first valve is closed when the second valve is open and vice versa, i.a. ensuring that no liquid can enter the vessel during emptying thereof, which is very important for measuring the precise volume of liquid coming from a patient. When a patient is urinating while emptying this new amount of urine, which has not yet be measured, will only be allowed access to the vessel through the inlet when the emptying process of the vessel is completed. In this way the new urine is measured accurately.

The apparatus including the collection chamber constitutes preferably an entirely hermetically sealed system in order to eliminate or at least minimise the risk of contamination, which otherwise would have adverse consequences for the patients health.

The processing means may be able to store the amount of urine emptied into the collection chamber so as to add it to the amount continuously measured in the vessel and display the total amount of urine delivered from a patient.

The processing means may control the second valve in response to the position of the float, so as to open the second valve automatically at a predetermined position of the float and thereby emptying the vessel when the volume of liquid reaches a predetermined value. Thus, a fully automatic apparatus is achieved not needing any actions from the nurse except from changing the collection chamber.

The first and/or second valve is preferably operated by magnetic force being controlled by a servomotor, or by a mechanical device controlled by an actuator.

The processing means may comprise a microprocessor, and a display for digital displaying of the volume present in the vessel may also be provided. The data of the volume may be stored in storage means and can be loaded for later use, and the data can be printed.

The display may allow the user via a keyboard or a touch screen to enter values, such as maximum level value before emptying the vessel.

The vessel may be detachable from the other parts of the apparatus, such that the vessel and collection chamber is disposable.

Depending on the type of catheter being connected to the apparatus and on the software in the processor, the apparatus may additionally display information about the temperature, the bladder pressure and/or oxygen level of the patient.

The apparatus may have measuring equipment for analysing the colour or the transparency of the urine. In this way other measures such as the temperature, blood, the concentration of different elements, compounds etc. may be analysed in the urine.

The apparatus may be wired or wireless to connected to other data collecting and processing devices.

According to a second aspect, the present invention relates to a method of measuring a volume of liquid in a vessel by;
- providing a float having a rough and uneven and thereby diffuse reflective surface at a level equal to the liquid surface in the vessel,
- emitting a light towards the surface of said float from a laser assembly,
- sensing the diffused light reflected from the float surface by sensing means and
- calculating by triangulation the level position of the float and thereby the volume of liquid present in the vessel based on input from at least said sensing means.

The method may further comprise measuring the tilting of the vessel from vertical by means of an accelerometer to correct for the tilting effect when calculating the level position of the float.

According to a third aspect, the present invention relates to the use of an apparatus according to the first aspect for measuring the volume of body liquids, such as urine.

Besides the preferred application of measuring body liquids, it should be understood that the apparatus according to the invention could be used in any application for measuring a volume of liquid in a vessel/container/tank, such as for example level of petrol in petrol tanks of vehicles or at petrol stations, during inducing medicaments, saline or the like into a human being.

### DESCRIPTION OF THE FIGURES

An embodiment of the invention will now be described more in details with reference to the accompanying figures, wherein
Figs. 1 shows a first embodiment of an apparatus according to the invention,
Fig. 2 shows a second embodiment of an apparatus according to the invention, and
Fig. 3 shows a third embodiment of an apparatus according to the invention.

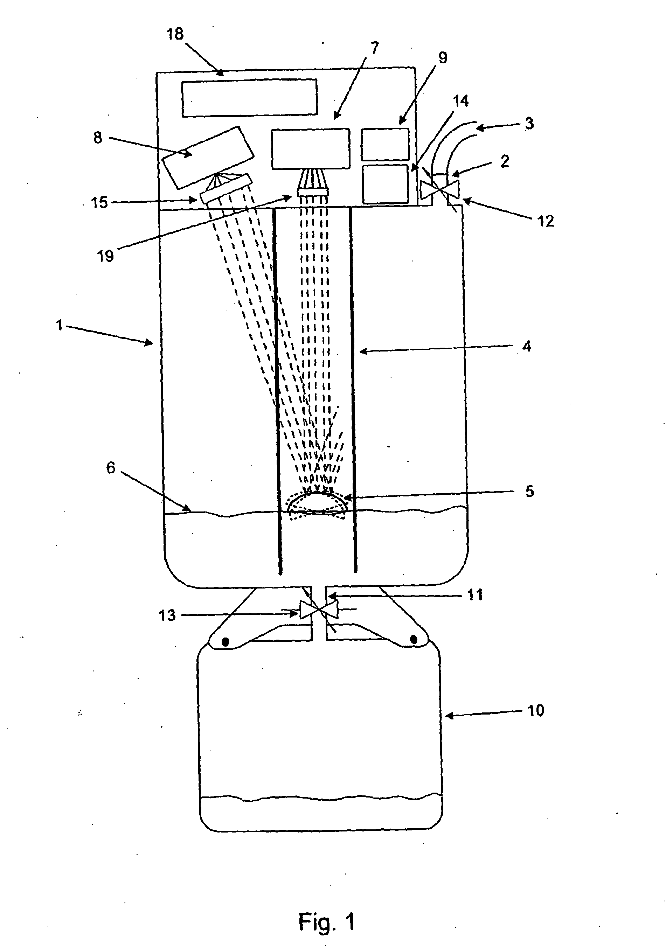

The apparatus of Fig. 1 show an electronic measuring of the amount of liquid present in the apparatus e.g. urine from a human being. The apparatus comprises a vessel 1 having an inlet 2 through which the liquid 6 enters into the vessel. The inlet can be connected to a catheter 3 positioned in the urethra of a patient (being any mammalian body). The inlet is closed and opened by a valve 12 controlled by a servomotor 14, e.g. using magnetic force to shut off the valve. The inlet 2 is closed by the first valve e.g. when emptying the vessel and opened again when the emptying process is completed. The first valve 12 may in another embodiment be closed manually.

A guiding member is in Fig. 1 shown in the form of a tube 4 is arranged inside the vessel 1 and functions as guidance for the vertical movement of a float 5 positioned in the tube. The guidance is needed in order for the laser beam to enlightened the diffused surface of the float, and thereby that some of the diffused light is emitted into the lens and sensor. The tube 4 is open for the liquid in the vessel, and the opening can be provided at the bottom as shown or for example as slots in the sidewall. The filling of liquid into the vessel will cause some turbulence with the tube. By having a lot of slots the filling of the vessel and tube with liquid is done more rapidly and the float is in this way more quickly stable for a more accurate measurement.

The float 5 floats on the surface 6 of the liquid (urine) in the vessel and follows the surface of the liquid as shown with dotted lines. A laser unit 7 is positioned above said tube 5 and emits a laser beam towards the surface of the float 5. As the float surface is diffuse reflective due to its surface roughness and possibly colour; the laser beam will be reflected in a plurality of directions, which ensures that some of the reflected light always will be focused by the lens 15 in front of the sensor 8 sensing the reflected light. Thus, the sensor 8 will detect the position of the float even if the vessel is tilted within a given angle in relation to vertical, such as up to 45 degrees from vertical. The sensor is preferably a PSD or CCD sensor including a lens in front of the sensor for focusing/collimating the light.

In other embodiments the light used in the apparatus may be IR, UV or the like. The choice of light source may vary depending on the surrounding light.

In case that the apparatus or just the vessel is tilted some, the laser beam will still hit the surface of the float just at another angle/position. Since the float has a diffused reflecting surface some of the laser beam is emitted further on to the sensor, whereby the processing means together with the sensor is able to determine to liquid level of the vessel. Due to the fact that the float is guided by the guidance member and the surface of the float is diffuse reflecting, the emitted light of the laser is always transmitted to the sensor.

A three-axis accelerometer 9 may be provided in the apparatus for measuring the force of gravity in order to determine the tilt and direction of the vessel 1, which is used to correct for the vertical position when calculating the level of the float 5. By applying an accelerometer, the processor 18 is able to correct the measurement if the apparatus has been tilted during the measuring.

Based on the reflected light, the sensor 8 will send an input to a processor 18 (microprocessor), which then calculates the level position of the float based on input from the sensor and by the accelerometer.

A focusing lens 15,19 is positioned in front of the laser unit and sensor, respectively, to focus/collimate the light.

A collection chamber 10 is in fluid communication with the vessel via an outlet 11, so that the vessel can be emptied into the chamber 10. The outlet 11 is provided with a second valve 13 which may be manual or electronic operable. Preferably, it is controlled in combination with the first valve 12 of the inlet, such that the valve 12 is closed when the second valve 13 is open and vice versa. The processor 18 may control the valves 12, 13 such that when the fluid level reaches a predetermined level then the first valve 12 is closed and the second valve 13 is opened, so as to empty the vessel automatically. After a predetermined time when the chamber is empty, the second valve 13 is closed and the first valve 12 is opened so that liquid can enter the vessel through the inlet 2.

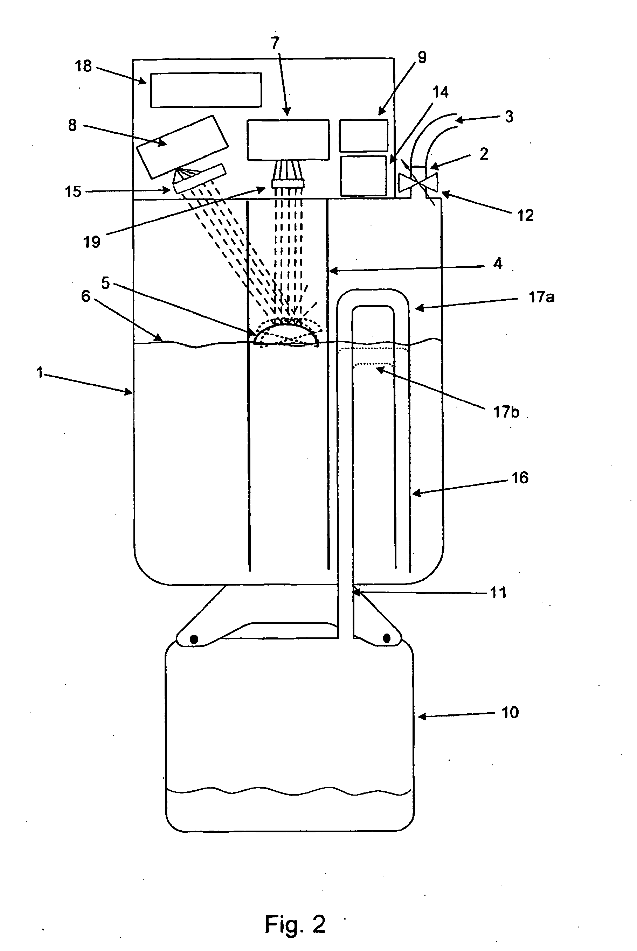

As described above, the apparatus of fig. 1 preferably empties the vessel automatically by opening/closing the valves 12, 13. However, the emptying can be made manually as shown in fig. 2 wherein the siphon principle is used. A pipe 16 is connected to the outlet 11 and by lowering the loop 17a of the pipe 16 below liquid level (shown as 17b) the vessel is emptied. The loop can be lowered manually or electronically controlled by the processor. The loop may be lowered or raised by pulling or drawing in a string loop fastened around the loop 17a being the upper end of the pipe. The system may also function automatically such that the loop 17a is stationary, and when the liquid level reaches the level of the loop, the vessel will automatically be emptied. The emptying sequence will then be detected by the drop of fluid level or by an optical sensor plate at the outlet.

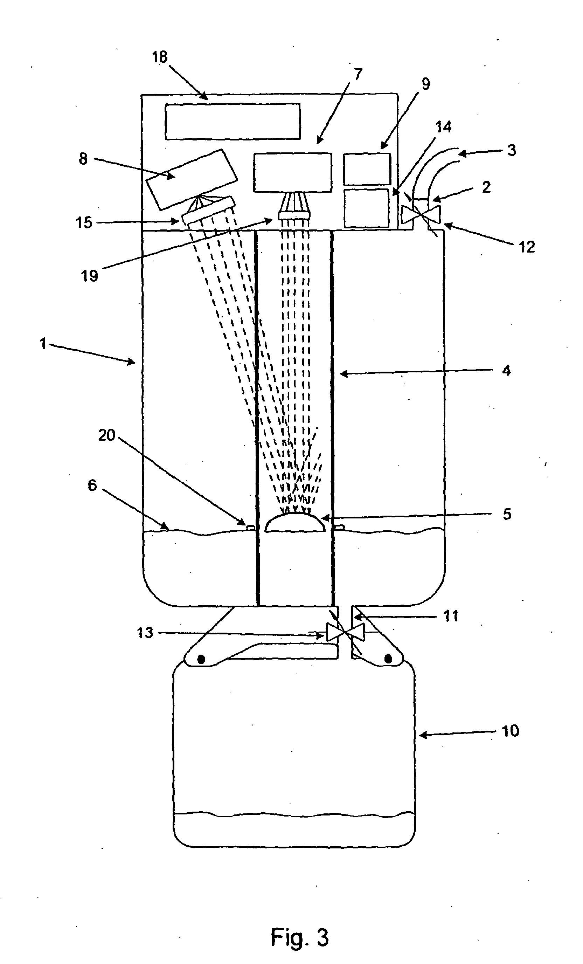

Fig. 3 shows another embodiment of the apparatus, wherein the float 5 is positioned in the guiding member 4, which is not open for liquid entering the vessel. A ring 20 is placed around the guiding member 4 and floats on the surface of the liquid 6. The ring 20 is preferably magnetic and thus holds the float, which is made of at least metal, up at the level equal to the surface of the liquid 6. Thus, the float 5 does not get in touch with the liquid, whereby the risk of getting the float locked inside the guiding member 4 is eliminated. Other embodiments of contact less interaction between the float 5 and the floating element 20 could of course be used.

The vessel may be made of a transparent material, such as any kind of polymer, in order for the personnel to have a view of the liquid inside the vessel. The vessel may have scales placed for manual reading so as to control whether the processor functions properly.

Due to the fact that the surface of the float is diffused reflecting and that the light source used may be a laser the guiding member or the vessel may be of a material having optical filter incorporated for diminution of the light emitted to the surroundings of the apparatus.

The collecting chamber may be any kind of disposable liquid collection bag. Furthermore, the vessel may be detachably connected to the housing 20 comprising the light source, the lenses, the processor, the lenses, the servomotor, the accelerometer, so that the vessel may be a disposable unit.

The vessel may furthermore be made in a material that may be sterilized in an autoclave in order to reuse the vessel.

The material of the vessel is preferably substantial rigid and in some kind of polymer, but may as well be of any kind of metal.

## Claims

1. An apparatus for collecting and measuring volume of liquids and comprising; a vessel (1) having a liquid inlet (2) and a liquid outlet (11), said vessel comprising a float (5) adapted to be disposed at a level equal to the surface of a liquid (6) in the vessel, a guiding member (4) defining a vertical movement guidance for said float, a light source assembly (7) being provided above said float and adapted to emit a light beam towards a surface of said float, **characterized by** the surface of said float being rough and uneven and thereby diffuse reflective, the apparatus further comprising sensing means (8) for sensing diffused light reflected from said float surface and processing means (18) for receiving and processing input from said sensing means based on the diffused reflected light so as to calculate the level position of the float and thereby the volume of liquid present in the vessel.

2. An apparatus according to claim 1, wherein the light source (7) is a laser.

3. An apparatus according to claim 1 or 2, wherein the float (5) is positioned inside the guiding member (4).

4. An apparatus according to any of claims 1-3, wherein said sensing means (8) comprises a PSD (Position Sensitive Detector) sensor or a CCD (Charge Coupled Device) sensor including a focusing lens for focusing the light reflected from the float surface.

5. An apparatus according to any of the preceding claims, further comprising an accelerometer (9) adapted to measure the force of gravity and send an input to the processing means (18) indicating the angle to vertical of the vessel to be used in calculating the volume of liquid present in the vessel (1).

6. An apparatus according to any of the preceding claims, further comprising a first valve (12) for closing said inlet.

7. An apparatus according to claim 6, wherein said first valve (12) is adapted to close the inlet (2) in response to an input received from the accelerometer (9) and/or processing means (18) when the vessel (1) is tilted a given angle from vertical so as to avoid outflow from the vessel.

8. An apparatus according to any of the preceding claims, further comprising a collection chamber (10) connected to the liquid outlet (11) of the vessel (1) for collecting liquid emptied from the vessel.

9. An apparatus according to claim 8, wherein a pipe (16) provides the fluid connection between the collection chamber (10) and the vessel (1), said pipe defining a loop (17a, 17b) with a highest point being movable from above liquid level to below liquid level in the vessel so as to enable emptying of said vessel by means of siphon principle.

10. An apparatus according to claim 8 or 9, wherein a fluid connection between the collection chamber (10) and vessel (1) comprises a second valve (13) for closing the fluid connection.

11. An apparatus according to claim 6 or 10, wherein said first and/or second valve (12, 13) is electronic controlled.

12. An apparatus according to claim 10 or 11, wherein said first valve (12) is controllable in relation to the second valve (13), such that the first valve is closed when the second valve is open and vice versa.

13. An apparatus according to claim 10, wherein the processing means (18) controls the second valve (13) in response to the position of the float (5), so as to open the second valve automatically and thereby emptying the vessel (1) when the volume of liquid reaches a predetermined value.

14. An apparatus according to claim 6 or 13, wherein the first and/or second valve (12; 13) is operated by magnetic force controlled by a servomotor, or by a mechanical device controlled by an actuator.

15. An apparatus according to any of the preceding claims, wherein the processing means (18) comprises a microprocessor.

16. An apparatus according to any of the preceding claims, further comprising a lens (19) provided in front of the light source assembly (7) for collimating the light from the assembly.

17. An apparatus according to any of the preceding claims, wherein the vessel (1) and/or collection chamber (10) is disposable.

18. An apparatus according to any of the preceding claims, wherein the processing means (18) comprises storage means for storing data of the volume of liquid to be printed out.

19. An apparatus according to any of the preceding claims, further comprising a display for displaying the volume present in the vessel (1).

20. An apparatus according to any of the preceding claims, wherein the guiding member (4) comprises a tube-like member being open for fluid entering the vessel, said float being adapted to be disposed on the surface of the liquid in said tube-like member.

21. An apparatus according to any of claims 1-19, wherein the guiding member (4) comprises a rod-shaped member along which said float (5) can slide.

22. An apparatus according to any of claims 1-19, wherein the guiding member (4) comprises a tube-like member not open for liquid entering the vessel, said float (5) being positioned inside said tube-like member and being in magnetic interaction with an element adapted to be disposed on the surface of the liquid outside said member.

23. A method of measuring a volume of liquid contained in a vessel (1) by;
- providing a float (5) having a rough and uneven and thereby diffuse reflective surface at a level (6) equal to the liquid surface in the vessel,
- emitting a collimated light towards the surface of said float from a laser assembly (7),
- sensing the diffused light reflected from the float surface by sensing means (8) and
- calculating by triangulation the level position of the float and thereby the volume of liquid present in the vessel based on input from at least said sensing means.

24. A method according to claim 23, further comprising measuring the tilting of the vessel (1) from vertical by means of an accelerometer (9) to correct for the tilting effect when calculating the level position of the float (5).

25. Use of an apparatus according to claims 1-22 for measuring the volume of body liquids, such as urine.

## Patentansprüche

1. Vorrichtung zum Sammeln und Messen von Volumen an Flüssigkeiten und umfassend ein Gefäß (1) mit einem Flüssigkeitseinlass (2) und einem Flüssigkeitsauslass (11), das Gefäß umfassend einen Schwimmer (5), der ausgebildet ist, auf einer Höhe, die gleich der Oberfläche einer Flüssigkeit (6) in dem Gefäß ist, angeordnet zu werden, ein Führungselement (4), das eine vertikale Bewegungsführung für den Schwimmer festlegt, eine Lichtquellenbaueinheit (7), die über dem Schwimmer bereitgestellt ist und ausgebildet ist, einen Lichtstrahl zu einer Oberfläche des Schwimmers zu senden, **dadurch gekennzeichnet, dass** die Oberfläche des Schwimmers rau und uneben und dadurch diffus reflektierend ist, die Vorrichtung weiterhin umfassend Erfassungsmittel (8) zum Erfassen von diffusem Licht, das von der Schwimmeroberfläche reflektiert wird, und Verarbeitungsmittel (18) zum Empfangen und Verarbeiten von Eingaben von den Erfassungsmitteln auf der Grundlage des diffusen reflektierten Lichts, um so die Höhenposition des Schwimmers und dadurch das Volumen an Flüssigkeit, das in dem Gefäß vorhanden ist, zu ermitteln.

2. Vorrichtung nach Anspruch 1, wobei die Lichtquelle (7) ein Laser ist.

3. Vorrichtung nach Anspruch 1 oder 2, wobei der Schwimmer innerhalb des Führungselements (4) positioniert ist.

4. Vorrichtung nach einem der Ansprüche 1-3, wobei das Erfassungsmittel (8) einen positionsempfindlichen Sensor (PSD, Position Sensitive Sensor) oder einen ladkungsgekoppelten (CCD, Charge Couple Devise) Sensor , einschließlich einer Fokussierlinse zum Fokussieren des Lichts, das von der Schwimmeroberfläche reflektiert wird, umfasst.

5. Vorrichtung nach einem der vorhergehenden Ansprüche, weiterhin umfassend einen Beschleunigungsmesser (9), der ausgebildet ist, die Schwerkraft zu messen und eine Eingabe an das Verarbeitungsmittel (18) zu senden, die den Winkel des Gefäßes zur Senkrechten angibt, der beim Ermittlen des Volumens an Flüssigkeit, das in dem Gefäß (1) vorhanden ist, zu verwenden ist.

6. Vorrichtung nach einem der vorhergehenden Ansprüche, weiterhin umfassend ein erstes Ventil (12) zum Schließen des Einlasses.

7. Vorrichtung nach Anspruch 6, wobei das erste Ventil (12) ausgebildet ist, den Einlass (2) als Antwort auf eine Eingabe, die von dem Beschleunigungsmesser (9) und/oder dem Verarbeitungsmittel (18) empfangen wird, zu schließen, wenn das Gefäß (1) einem vorgegebenen Winkel aus der Senkrechten geneigt ist, um ein Ausfließen aus dem Gefäß zu verhindern.

8. Vorrichtung nach einem der vorhergehenden Ansprüche, weiterhin umfassend eine Sammelkammer (10), die mit dem Flüssigkeitsauslass (11) des Gefäßes (1) verbunden ist, zum Sammeln von Flüssigkeit, die aus dem Gefäß entleert wurde.

9. Vorrichtung nach Anspruch 8, wobei ein Rohr (16) die Fluidverbindung zwischen der Sammelkammer (10) und dem Gefäß (1) bereitstellt, wobei das Rohr eine Schleife (17a, 17b) mit einem höchsten Punkt definiert, der von über dem Flüssigkeitsspiegel bis unter den Flüssigkeitsspiegel in dem Gefäß bewegbar ist, um ein Entleeren des Gefäßes nach dem Siphonprinzip zu ermöglichen.

10. Vorrichtung nach Anspruch 8 oder 9, wobei eine Fluidverbindung zwischen der Sammelkammer (10) und dem Gefäß (1) ein zweites Ventil (13) zum Schließen der Fluidverbindung umfasst.

11. Vorrichtung nach Anspruch 6 oder 10, wobei das erste und/oder zweite Ventil (12, 13) elektronisch gesteuert ist/sind.

12. Vorrichtung nach Anspruch 10 oder 11, wobei das erste Ventil (12) im Verhältnis zum zweiten Ventil (13) steuerbar ist, sodass das erste Ventil geschlossen ist, wenn das zweite Ventil geöffnet ist, und umgekehrt.

13. Vorrichtung nach Anspruch 10, wobei das Verarbeitungsmittel (18) das zweite Ventil (13) als Antwort auf die Position des Schwimmers (5) steuert, um das zweite Ventil automatisch zu öffnen und dadurch das Gefäß (1) zu entleeren, wenn das Volumen an Flüssigkeit einen vorbestimmten Wert erreicht.

14. Vorrichtung nach Anspruch 6 oder 13, wobei das erste und/oder zweite Ventil (12; 13) durch magnetische Kraft, die von einem Stellmotor gesteuert wird, oder durch eine mechanische Vorrichtung, die von einem Stellglied gesteuert wird, betätigt wird/werden.

15. Vorrichtung nach einem der vorhergehenden Ansprüche, wobei das Verarbeitungsmittel (18) einen Mikroprozessor umfasst.

16. Vorrichtung nach einem der vorhergehenden Ansprüche, weiterhin umfassend eine Linse (19), die vor der Lichtquellenbaueinheit (7) bereitgestellt ist, zum Bündeln des Lichts von der Baueinheit.

17. Vorrichtung nach einem der vorhergehenden Ansprüche, wobei das Gefäß (1) und/oder die Sammelkammer (10) ein Einwegartikel ist/sind.

18. Vorrichtung nach einem der vorhergehenden Ansprüche, wobei das Verarbeitungsmittel (18) Speichermittel zum Speichern von Daten des Volumens an Flüssigkeit umfasst, die auszudrucken sind.

19. Vorrichtung nach einem der vorhergehenden Ansprüche, weiterhin umfassend eine Anzeige zum Anzeigen des Volumens, das in dem Gefäß (1) vorhanden ist.

20. Vorrichtung nach einem der vorhergehenden Ansprüche, wobei das Führungselement (4) ein rohrförmiges Element umfasst, das für Fluid, das in das Gefäß eintritt, offen ist, wobei der Schwimmer ausgebildet ist, auf der Oberfläche der Flüssigkeit in dem rohrförmigen Element angeordnet zu sein.

21. Vorrichtung nach einem der Ansprüche 1-19, wobei das Führungselement (4) ein stabförmiges Element umfasst, an dem der Schwimmer (5) entlang gleiten kann.

22. Vorrichtung nach einem der Ansprüche 1-19, wobei das Führungselement (4) ein rohrförmiges Element umfasst, das nicht für Flüssigkeit, die in das Gefäß eintritt, offen ist, wobei der Schwimmer (5) innerhalb des rohrförmigen Elements positioniert ist und in magnetischer Wechselwirkung mit einem Element ist, das ausgebildet ist, auf der Oberfläche der Flüssigkeit außerhalb des Elements angeordnet zu sein.

23. Verfahren zum Messen eines Volumens an Flüssigkeit, das in einem Gefäß (1) enthalten ist, durch
- Bereitstellen eines Schwimmers (5) mit einer rauen und unebenen und **dadurch** diffus reflektierenden Oberfläche auf einer Höhe (6), die gleich der Flüssigkeitsoberfläche in dem Gefäß ist.
- Senden von gebündeltem Licht zu der Oberfläche des Schwimmers von einer Laserbaueinheit (7),
- Erfassen des diffusen Lichts, das von der Schwimmeroberfläche reflektiert wird, durch Erfassungsmittel (8) und
- Ermitteln der Höhenposition des Schwimmers durch Triangulation und **dadurch** des Volumens an Flüssigkeit, das in dem Gefäß vorhanden ist, auf der Grundlage von Eingaben von mindestens dem Erfassungsmittel.

24. Verfahren nach Anspruch 23, weiterhin umfassend Messen der Neigung des Gefäßes (1) aus der Senkrechten mittels eines Beschleunigungsmessers (9), um die Neigungswirkung beim Ermitteln der Höhenposition des Schwimmers (5) zu korrigieren.

25. Verwendung einer Vorrichtung nach Anspruch 1-22 zum Messen des Volumens von Körperflüssigkeiten, wie Urin.

## Revendications

1. Appareil de collecte et de mesure du volume de liquides et comprenant ; un récipient (1) ayant une entrée de liquide (2) et une sortie de liquide (11), ledit récipient comprenant un flotteur (5) adapté pour être disposé à un niveau égal à la surface d'un liquide (6) dans le récipient, un élément de guidage (4) définissant un mouvement de guidage vertical pour ledit flotteur, un ensemble de source lumineuse (7) qui est fourni au-dessus dudit flotteur et adapté pour émettre un faisceau de lumière vers une surface dudit flotteur, **caractérisé par** la surface dudit flotteur rugueuse et inégale et, par conséquent, à réflexion diffuse, l'appareil comprenant en outre un moyen de détection (8) pour détecter la lumière diffuse réfléchie par ladite surface de flotteur et un moyen de traitement (18) pour recevoir et traiter l'entrée de données dudit moyen de détection basée sur la lumière réfléchie diffuse de manière à calculer la position de niveau du flotteur et donc le volume du liquide présent dans le récipient.

2. Appareil selon la revendication 1, dans lequel la source de lumière (7) est un laser.

3. Appareil selon la revendication 1 ou 2, dans lequel le flotteur (5) est positionné à l'intérieur de l'élément de guidage (4).

4. Appareil selon l'une quelconque des revendications 1 à 3, dans lequel ledit moyen de détection (8) comprend un capteur PSD (détecteur sensible à la position) ou un capteur CCD (dispositif à couplage de charge) comprenant une lentille de focalisation pour focaliser la lumière réfléchie par la surface du flotteur.

5. Appareil selon l'une quelconque des revendications précédentes, comprenant en outre un accéléromètre (9) adapté pour mesurer la force de gravité et envoyer une entrée de données au moyen de traitement (18) indiquant l'angle par rapport à la verticale du récipient devant être utilisé dans le calcul du volume du liquide présent dans le récipient (1).

6. Appareil selon l'une quelconque des revendications précédentes, comprenant en outre une première vanne (12) pour fermer ladite entrée.

7. Appareil selon la revendication 6, dans lequel ladite première vanne (12) est adaptée pour fermer l'entrée (2) en réponse à une entrée de données reçue de l'accéléromètre (9) et/ou du moyen de traitement (18) lorsque le récipient (1) est incliné à un angle donné par rapport à la verticale de manière à éviter un écoulement du récipient.

8. Appareil selon l'une quelconque des revendications précédentes, comprenant en outre une chambre de collecte (10) connectée à la sortie de liquide (11) du récipient (1) pour collecter le liquide vidé du récipient.

9. Appareil selon la revendication 8, dans lequel un tuyau (16) assure la connexion de fluide entre la chambre de collecte (10) et le récipient (1), ledit tuyau définissant une boucle (17a, 17b) avec un point le plus haut mobile de au-dessus du niveau du liquide à au-dessous du niveau du liquide dans le récipient afin de permettre le vidage dudit récipient au moyen du principe du siphon.

10. Appareil selon la revendication 8 ou 9, dans lequel une connexion de fluide entre la chambre de collecte (10) et le récipient (1) comprend une seconde vanne (13) pour fermer la connexion de fluide.

11. Appareil selon la revendication 6 ou 10, dans lequel ladite première et/ou seconde vanne (12, 13) est sous commande électronique.

12. Appareil selon la revendication 10 ou 11, dans lequel ladite première vanne (12) est contrôlable par rapport à la seconde vanne (13) de telle sorte que la première vanne est fermée lorsque la seconde vanne est ouverte et vice-versa.

13. Appareil selon la revendication 10, dans lequel le moyen de traitement (18) commande la seconde vanne (13) en réponse à la position du flotteur (5) de façon à ouvrir la seconde vanne automatiquement et ainsi vider le récipient (1) lorsque le volume de liquide atteint une valeur prédéterminée.

14. Appareil selon la revendication 6 ou 13, dans lequel la première et/ou seconde vanne (12, 13) est actionnée par une force magnétique commandée par un servomoteur, ou par un dispositif mécanique commandé par un actionneur.

15. Appareil selon l'une quelconque des revendications précédentes, dans lequel le moyen de traitement (18) comprend un microprocesseur.

16. Appareil selon l'une quelconque des revendications précédentes, comprenant en outre une lentille (19) prévue devant l'ensemble de source lumineuse (7) pour collimater la lumière de l'ensemble.

17. Appareil selon l'une quelconque des revendications précédentes, dans lequel le récipient (1) et/ou la chambre de collecte (10) est jetable.

18. Appareil selon l'une quelconque des revendications précédentes, dans lequel le moyen de traitement (18) comprend un moyen de stockage pour stocker des données du volume de liquide devant être imprimées.

19. Appareil selon l'une quelconque des revendications précédentes, comprenant en outre un écran pour afficher le volume présent dans le récipient (1).

20. Appareil selon l'une quelconque des revendications précédentes, dans lequel l'élément de guidage (4) comprend un élément en forme de tube ouvert pour le liquide entrant dans le récipient, ledit flotteur étant adapté pour être disposé sur la surface du liquide dans ledit élément en forme de tube.

21. Appareil selon l'une quelconque des revendications 1 à 19, dans lequel l'élément de guidage (4) comprend un élément en forme de tige le long duquel ledit flotteur (5) peut glisser.

22. Appareil selon l'une quelconque des revendications 1 à 19, dans lequel l'élément de guidage (4) comprend un élément en forme de tube non ouvert pour le liquide entrant dans le récipient, ledit flotteur (5) étant positionné à l'intérieur dudit élément en forme de tube et étant en interaction magnétique avec un élément adapté pour être disposé sur la surface du liquide à l'extérieur dudit élément.

23. Procédé permettant de mesurer un volume de liquide contenu dans un récipient (1) en ;
- fournissant un flotteur (5) ayant une surface rugueuse et inégale et, par conséquent, à réflexion diffuse à un niveau (6) égal à la surface du liquide dans le récipient,
- émettant une lumière collimatée vers la surface dudit flotteur provenant d'un ensemble laser (7),
- détectant la lumière diffuse réfléchie par la surface du flotteur par un moyen de détection (8) et
- calculant par triangulation la position de niveau du flotteur et donc le volume du liquide présent dans le récipient, sur la base de l'entrée de données provenant au moins dudit moyen de détection.

24. Procédé selon la revendication 23, comprenant en outre la mesure de l'inclinaison du récipient (1) par rapport à la verticale au moyen d'un accéléromètre (9) pour corriger l'effet d'inclinaison lors du calcul de la position de niveau du flotteur (5).

25. Utilisation d'un appareil selon les revendications 1 à 22 pour mesurer le volume de liquides corporels, tels que l'urine.
